# EUROPÄISCHE PATENTANMELDUNG

(11) **EP 0 684 461 A1**
(43) Veröffentlichungstag der Anmeldung: **29.11.1995**
(21) Anmeldenummer: 95201289.6
(22) Anmeldetag: 17.05.1995
(51) Int. Cl.: G01G 3/14, G01G 21/00

(54) **Wägezelle**

(30) Priorität: 25.05.1994 DE 4418131
(71) Anmelder: Philips Patentverwaltung GmbH, 22335 Hamburg (DE); Philips Electronics N.V., 5621 BA Eindhoven (NL)
(72) Erfinder: Birkmann, Stephen, c/o Philips Patentverwaltung, D-20097 Hamburg (DE); Schultes, Günther, Dr., c/o Philips Patentverw., D-20097 Hamburg (DE); Herrnring, Jörg, c/o Philips Patentverwaltung, D-20097 Hamburg (DE)
(74) Vertreter: Hartmann, Heinrich, Dipl.-Ing.

(57) **Zusammenfassung**

Die Erfindung betrifft eine Wägezelle mit einem metallischen Meßelement (1), welches zwischen unverformbaren Randbereichen (2) eine durch die zu messende Kraft elastisch verformbare Meßfläche (4) aufweist, auf welcher die Verformung detektierende Sensorelemente angebracht sind, welche mit weiteren Schaltungselementen eine Meßschaltung bilden, welche mit Anschlußadern (13) eines Anschlußkabels (7) elektrisch verbunden ist, und mit einer durch die Meßfläche (4) und durch davon abstehende Seitenwände (5) begrenzten Schaltungskammern (9) sowie mit einer Kabeldurchführungsanordnung (6,8) für das Anschlußkabel (7). Durch die Betriebstemperaturen von bis zu 200 _{°} C, insbesondere bei häufigen Temperaturwechseln, wird dadurch eine konstant bleibende hohe Meßgenauigkeit gewährleistet, daß die Schaltungskammer mit Gas gefüllt und allseitig gasdicht geschlossen ist.

## Beschreibung

Die Erfindung bezieht sich auf eine Wägezelle mit einem metallischen Meßelement, welches zwischen unverformbaren Randbereichen eine durch die zu messende Kraft elastisch verformbare Meßfläche aufweist, auf welcher die Verformung detektierende Sensorelemente angebracht sind, welche mit weiteren Schaltungselementen eine Meßschaltung bilden, welche mit Anschlußadern eines Anschlußkabels elektrisch verbunden ist, und mit einer durch die Meßfläche und durch davon abstehende Seitenwände begrenzten Schaltungskammer sowie mit einer Kabeldurchführungsanordnungfür das Anschlußkabel.

Eine derartige Wägezelle wurde von der Anmelderin hergestellt und vertrieben. Die Anschlußkammer wurde mit einer weichen Vergußmasse gefüllt, welche die Sensoren, die weiteren Schaltungselemente und das in die Anschlußkammern ragende Ende des Anschlußkabels abdeckt. Dadurch sollten die bedeckten Elemente mechanisch und gegen Feuchtigkeitseinwirkung geschützt werden. Bei höheren Betriebstemperaturen, insbesondere bei häufigen Temperaturwechseln, verschlechtert sich die Meßgenauigkeit einer solchen Wägezelle erheblich.

Der Erfindung liegt die Aufgabe zugrunde, eine Wägezelle der eingangs genannten Art derart zu gestalten, daß sie auch bei Betriebstemperaturen von bis zu 200 _{°} C insbesondere bei häufigen Temperaturwechseln über lange Zeit eine konstant bleibende hohe Meßgenauigkeit gewährleistet.

Die Lösung gelingt dadurch, daß die Schaltungskammer mit Gas gefüllt und allseitig gasdicht geschlossen ist.

Es wurde festgestellt, daß die anfangs gut abdeckende Wirkung der Vergußmasse bei höheren Temperaturen, insbesondere nach zahlreichen Temperaturspielen, erheblich beeinträchtigt wurde. Einerseits sind temperaturfeste Vergußmassen sehr hygroskopisch. Andererseits neigen sie dazu, sich zumindest stellenweise von den bedeckten Flächen zu lösen, so daß dort kleine Hohlräume entstehen. Dort kann sich Feuchtigkeit ansammeln, die dort aus der bei Temperaturspielen wiederholt eindringenden Luft kondensiert. Es entstehen beispielsweise elektrische Feuchtigkeitsbrücken zwischen Kontakten, welche die Solldaten der Meßschaltung verfälschen.

Bei der erfindungsgemäßen Lösung wird auf eine Abdeckung mit Vergußmasse verzichtet. In der Schaltkammer befindet sich Atmosphärengas. Ein feuchtigkeitstransportierender Luftaustausch bei Temperaturwechseln ist durch die gasdichte Ausführung verhindert.

Die Seitenwände können als Auflagerohr ausgebildet und mit den Randbereichen verbunden, vorzugsweise verschweißt sein.

Eine vorteilhafte Ausführung ist dadurch gekennzeichnet, daß die offene Seite des Auflagerohrs durch ein metallisches Bodenblech abgeschlossen ist, welches mit seinen Randbereichen gasdicht mit dem Auflagerohr verbunden, vorzugsweise verschweißt ist. Das Bodenblech wird nach Fertigstellung sämtlicher elektrischer Verbindungsarbeiten als mechanischer Abschluß und zur Abdichtung befestigt. Eine besonders sichere und zeitlich unbegrenzt wirksame Abdichtung erreicht man durch eine kontinuierlich durchgehende Schweißnaht.

Besonders kritisch hinsichtlich der Abdichtung der Schaltungskammer ist die Durchführung der Adern eines äußeren Anschlußkabels. Bei einer besonders vorteilhaften bevorzugten Lösung ist vorgesehen, daß die Kabeldurchführungsanordnung Anschlußstifte umfaßt, welche sich gasdicht durch eine Isolierfassung erstrecken, welche wiederum gasdicht in einer in die Schaltungskammer führenden Öffnung gehalten ist, daß freie Enden der Anschlußstifte in die Schaltungskammer ragen und mit der Meßschaltung elektrisch verbunden sind, und daß nach außen ragende Enden mit Anschlußadern des Anschlußkabels elektrisch verbunden sind. Dann ist ausgeschlossen, daß an Kabelaufbauelementen entlang kriechende Feuchtigkeit in das Innere der Schaltungskammer an die dort befindlichen Schaltungselemente oder Kontaktstellen gelangen kann.

Insbesondere ist eine Isolierfassung aus Glas geeignet, welches auch bei hohen Temperaturen von mehr als 200 °C eine möglichst unveränderliche hohe Isolation gewährleistet.

Die Isolierfassung kann direkt in eine Öffnung einer Wand der Schaltungskammer eingeschmolzen sein, bevorzugt wird jedoch, daß die Isolierfassung aus Glas besteht, welches um die Anschlußstifte in eine metallische Aufnähmehülse geschmolzen ist. Für die Aufnahmehülse kann man einen Werkstoff wählen, welcher etwa den gleichen thermischen Ausdehnungskoeffizient wie die gewählte Glasart hat.

Die Aufnähmehülse kann gasdicht in eine Öffnung einer Wand der Schaltungskammer eingeschweißt sein. Eine bevorzugte Lösung ist jedoch dadurch gekennzeichnet, daß die zur Schaltungskammer führende Öffnung in einem Schraubstutzen ausgebildet ist, welcher gasdicht in einer in die Schaltungskammer führenden Öffnung befestigt, vorzugsweise eingeschweißt ist.

Damit ein Kriechen von Feuchtigkeit in den Bereich der nach außen ragenden Anschlußstifte weitgehend verhindert wird, ist vorgesehen, daß die Kabeldurchführungsanordnung eine zwischen Kabelmantel und einer Wand der Schaltungskammer abdichtende elastische Dichtung umfaßt, insbesondere in Verbindung mit einer Kabelverschraubung.

Die Verbindung der Anschlußstifte mit den Anschlußadern des Anschlußkabels wird dadurch erleichtert, daß die Anschlußstifte Röhrchen sind, in deren Enden Anschlußadern des Anschlußkabels eingeführt und vercrimpt sind, und mit deren anderen Enden die Verbindungsdrähte verschweißt sind. Selbstverständlich müssen für die in der Schaltungskammer befindlichen Sensoren und Schaltungselemente sowie für zugehörige elektrische Verbindungselemente und Tragkörper per se ausreichend temperaturfeste Materialien gewählt werden.

Eine solche Temperaturfestigkeit wird in besonders einfacher Weise gemäß einer Weiterbildung der Erfindung dadurch erreicht, daß die Sensorelemente gemeinsam mit den weiteren Schaltungselementen als Dünnschichtelemente auf die Meßfläche aufgebracht sind.

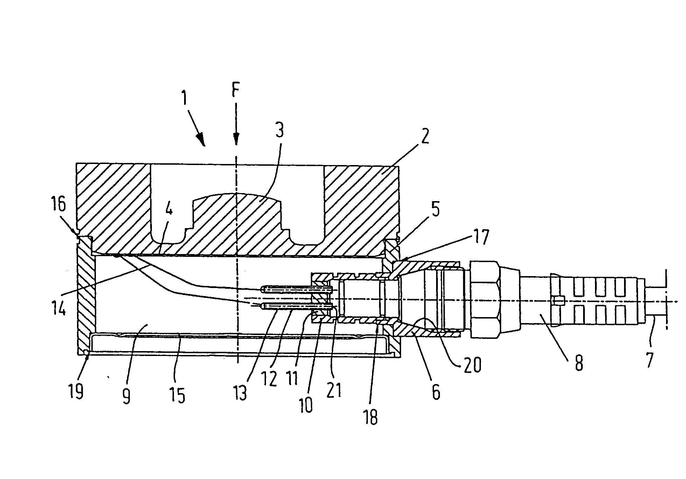

Die Erfindung wird anhand der Beschreibung eines in der Zeichnung dargestellten bevorzugten Ausführungsbeispiels näher erläutert.

Die Fig. zeigt einen Schnitt durch eine erfindungsgemäße Wägezelle.

Das Meßelement 1 ist mit seinem steifen Randbereich 2 mit einem Auflagerohr 5 verbunden. Durch eine auf den zentralen Ansatz 3 wirkende Kraft F ist die Meßfläche 4 elastisch verformbar. Das Ausmaß der Verformung ist durch an der Meßfläche 4 angebrachte nicht dargestellte Sensoren (Dehnungsmeßwiderstände) detektierbar.

Vorzugsweise auf einem sich wenig verformenden Teil der Meßfläche 4 sind weitere ebenfalls nicht dargestellte Schaltungselemente angeordnet. Die Sensoren und die weiteren Schaltungselemente bilden eine Meßschaltung und sind in Dünnfilmtechnik auf die Meßfläche 4 aufgebracht, wie es beispielsweise in der DE-A 30 12 984 beschrieben ist.

Mit einer solchen Dünnschichtschaltung können alle Kenngrößen der Wägezelle abgeglichen werden, insbesondere auch folgende Kenngrößen:
- Kennwert
- TK-Kennwert
- Nullpunkt
- TK-Nullpunkt
- Ausgangswiderstand
- Eingangswiderstand
- Symmetrielage

Die Widerstände dieser kraftnebenschlußfreien Abgleichschaltung werden durch analoges oder digitales Trimmen mittels Laserschnitt- oder Funkenerosionsverfahren auf die erforderlichen Werte gebracht.

In eine Durchführungsbohrung des Auflagerohrs 5 ist ein Einschraubstutzen 6 eingesetzt, in welchen die den Endabschnitt des Anschlußkabels 7 umgebende Schraubmanschette 8 eingeschraubt ist.

Der Einschraubstutzen 6 ist durch eine in die Schaltungskammer 9 reichende Aufnahmehülse 10 verlängert, welche die aus Glas bestehende Isolierfassung 11 trägt, durch welche sich röhrchenförmige Anschlußstifte 12 erstrecken. In diese Anschlußstifte sind Anschlußadern 13 des Anschlußkabels 7 eingeführt und eingelötet.

An die in die Schaltungskammer 9 ragenden Enden sind Verbindungsdrähte 14 geschweißt, welche eine elektrische Verbindung zu der Meßschaltung herstellen. Die Verschweißung bewirkt einen gasdichten Verschluß der inneren Kanäle der Anschlußstifte 12.

Ein Bodenblech 15 bildet den unteren Abschluß der Schaltungskammer 9.

Das Meßelement 1, das Auflagerohr 2, das Bodenblech 15, der Einschraubstutzen 6 und die Aufnahmehülse 10 bestehen aus gegebenenfalls verschiedenartigen Edelstahllegierungen und sind miteinander über Schweißnähte 16, 17, 18 bzw. 19 gasdicht verbunden. Eine Microplasma-Schweißung ist besonders geeignet und ergibt dauerhaft gasdichte Verbindungsnähte. Die Schaltungskammer 9 ist dadurch hermetisch gegenüber der Umgebungsluft abgedichtet.

Für die Aufnähmehülse 10 ist ein Edelstahl gewählt, welcher praktisch den gleichen thermischen Ausdehnungskoeffizienten wie das Glas der Isolierfassung 11 hat. Als Glas wurde eine hochwertige Zusammensetzung gewählt, welche auch bei Temperaturen von etwa 180°C einen hohen Isolierwiderstand von mehr als 10 GOhm bei 100 V gewährleistet.

Der Edelstahl des Einschraubstutzen 6 wurde dagegen gezielt im Hinblick auf Korrosionsfestigkeit gewählt.

Die Schraubmanschette 8 besteht aus einem temperaturbeständigen elastomeren Kunststoff (Viton). Die konische Klemmfläche 20 bewirkt beim Einschrauben der Schraubmanschette 8 in den Schraubstutzen 6 eine pressende Abdichtung zwischen dem Mantel des Anschlußkabels 7 und dem Einschraubstutzen 6, so daß Feuchtigkeit der Umgebungsluft nicht in den Endbereich 21 der Anschlußstifte 12 gelangen kann.

## Patentansprüche

1. Wägezelle mit einem metallischen Meßelement (1), welches zwischen unverformbaren Randbereichen (2) eine durch die zu messende Kraft elastisch verformbare Meßfläche (4) aufweist, auf welcher die Verformung detektierende Sensorelemente angebracht sind, welche mit weiteren Schaltungselementen eine Meßschaltung bilden, welche mit Anschlußadern (13) eines Anschlußkabels (7) elektrisch verbunden ist, und mit einer durch die Meßfläche (4) und durch davon abstehende Seitenwände (5) begrenzten Schaltungskammer (9) sowie mit einer Kabeldurchführungsanordnung (6,8) für das Anschlußkabel (7),
dadurch gekennzeichnet,
daß die Schaltungungskammer (9) mit Gas gefüllt und allseitig gasdicht geschlossen ist.

2. Wägezelle nach Anspruch 1,
dadurch gekennzeichnet,
daß die Seitenwände als Auflagerohr (5) ausgebildet und mit den Randbereichen (2) verbunden, vorzugsweise verschweißt sind.

3. Wägezelle nach Anspruch 2,
dadurch gekennzeichnet,
daß die offene Seite des Auflagerohrs (5) durch ein metallisches Bodenblech (15) abgeschlossen ist, welches mit seinen Randbereichen gasdicht mit dem Auflagerohr (5) verbunden, vorzugsweise verschweißt ist.

4. Wägezelle nach einem der Ansprüche 1 bis 3,
dadurch gekennzeichnet,
daß die Kabeldurchführungsanordnung Anschlußstifte (12) umfaßt, welche sich gasdicht durch eine Isolierfassung (11) erstrecken, welche wiederum gasdicht in einer in die Schaltungskammer (9) führenden Öffnung gehalten ist, daß freie Enden der Anschlußstifte (12) in die Schaltungskammer (9) ragen und mit der Meßschaltung elektrisch verbunden sind, und daß nach außen ragende Enden (21) mit Anschlußadern (13) des Anschlußkabels (7) elektrisch verbunden sind.

5. Wägezelle nach Anspruch 4,
dadurch gekennzeichnet,
daß die Isolierfassung (11) aus Glas besteht, welches um die Anschlußstifte (12) in eine metallische Aufnähmehülse (10) geschmolzen ist.

6. Wägezelle nach Anspruch 5,
dadurch gekennzeichnet,
daß die Aufnähmehülse (10) gasdicht in einer zur Schaltungskammer (9) führende Öffnung des Auflagerohrs (5) befestigt, vorzugsweise eingeschweißt ist.

7. Wägezelle nach Anspruch 5,
dadurch gekennzeichnet,
daß die zur Schaltungskammer (9) führende Öffnung in einem Schraustutzen (6) ausgebildet ist, welcher gasdicht in einer zur Schaltungskammer (9) führenden Öffnung befestigt, vorzugsweise eingeschweißt ist.

8. Wägezelle nach einem der Ansprüche 1 bis 7,
dadurch gekennzeichnet,
daß die Kabeldurchführungsanordnung eine zwischen Kabelmantel und einer Wand der Schaltungskammer (9) abdichtende elastische Dichtung umfaßt (Klemmfläche 20), insbesondere in Verbindung mit einer Kabelverschraubung (6,8).

9. Wägezelle nach einem der Ansprüche 1 bis 8,
dadurch gekennzeichnet,
daß die Anschlußstifte (12) Röhrchen sind, in deren Enden Anschlußadern (13) des Anschlußkabels (7) eingeführt und vercrimpt sind, und mit deren anderen Enden die Verbindungsdrähte (14) verschweißt sind.

10. Wägezelle nach einem der Ansprüche 1 bis 9,
dadurch gekennzeichnet,
daß die Sensorelemente gemeinsam mit den weiteren Schaltungselementen als Dünnschichtelemente auf die Meßfläche (4) aufgebracht sind.
